## Europäisches Patentamt
## European Patent Office
## Office européen des brevets

(19)

(11) Veröffentlichungsnummer: **0 065 119**
**B1**

(12) # EUROPÄISCHE PATENTSCHRIFT

(45) Veröffentlichungstag der Patentschrift:
13.08.86

(51) Int. Cl.⁴: **B 60 T 17/00**

(21) Anmeldenummer: **82103399.0**

(22) Anmeldetag: **22.04.82**

(54) Einrichtung zum Einbringen von Frostschutzmittel in eine Druckluftanlage.

(30) Priorität: **19.05.81 DE 3119838**

(43) Veröffentlichungstag der Anmeldung:
**24.11.82 Patentblatt 82/47**

(45) Bekanntmachung des Hinweises auf die Patenterteilung:
**13.08.86 Patentblatt 86/33**

(84) Benannte Vertragsstaaten:
**AT CH DE FR GB LI SE**

(56) Entgegenhaltungen:
**DE-A-2 036 164**
**DE-A-2 124 327**
**DE-A-2 261 987**
**US-A-1 982 622**

(73) Patentinhaber: **WABCO Westinghouse Fahrzeugbremsen GmbH, Am Lindener Hafen 21 Postfach 91 12 80, D-3000 Hannover 91 (DE)**

(72) Erfinder: **Bartscher, Peter, Berliner Strasse 32 B, D-3000 Hannover 91 (DE)**

(74) Vertreter: **Schrödter, Manfred, WABCO Westinghouse Fahrzeugbremsen GmbH Am Lindener Hafen 21 Postfach 91 12 80, D-3000 Hannover 91 (DE)**

EP 0 065 119 B1

## Beschreibung

Die Erfindung betrifft eine Einrichtung zum Einbringen von Frostschutzmittel in eine Druckluftanlage gemäß dem Oberbegriff des Patentanspruchs 1.

Derartige Einrichtungen sind erforderlich, um bei Umgebungstemperaturen um den Gefrierpunkt herum oder darunter die Betriebssicherheit von Druckluftanlagen, wie z.B. Druckluftbremsanlagen, zu gewährleisten. Als Frostschutzmittel dient beispielsweise Spiritus oder dergleichen. Durch das Einbringen des Frostschutzmittels in die Druckluftanlage wird der Gefrierpunkt der in der Druckluftanlage nicht vermeidbaren Luftfeuchte herabgesetzt. Einrichtungen dieser Art werden auch als Frostschützer oder bei automatischem Betrieb als Frostschutzpumpe bezeichnet.

Eine Einrichtung der eingangs erwähnten Art ist als automatische Frostschutzpumpe für eine Fahrzeug-Druckluftbremsanlage durch die DE-A-2 036 164 bekannt. Zum Zwecke der Steuerung der Antriebseinrichtung in Abhängigkeit von verschiedenen Betriebszuständen des Fahrzeugs weist dort das elektrische Steuerteil einen entsprechenden Signaleingang auf. Dieser Signaleingang wird beispielsweise dann angesteuert, wenn die Bremseinrichtung oder die Kupplung des Fahrzeugs betätigt wird. Um die beschriebene Einrichtung außer Betrieb setzen zu können, z.B. wenn die Umgebungstemperatur so hoch liegt, daß das Frostschutzmittel nicht in der Druckluftbremsanlage benötigt wird, ist die bekannte Einrichtung mit einem in der Stromzuführung angeordneten elektrischen Schalter versehen. Dies bedeutet, daß bei Nachlässigkeit des Fahrers des Fahrzeugs evtl. bei tiefen Temperaturen die Frostschutzeinrichtung abgestellt und bei hohen Temperaturen die Frostschutzeinrichtung eingeschaltet ist.

Der Erfindung liegt deshalb die Aufgabe zugrunde, eine Einrichtung der eingangs genannten Art zu schaffen, mit der auf einfache Weise der Betrieb der Fördereinrichtung bei diesen Temperaturen dem Luftdurchsatz der Druckluftanlage angepaßt werden kann und mit der bei Temperaturen über dem Gefrierpunkt der Betrieb der Fördereinrichtung automatisch eingestellt wird.

Diese Aufgabe wird durch die im kennzeichnenden Teil den Anspruchs 1 angegebenen Merkmale gelöst.

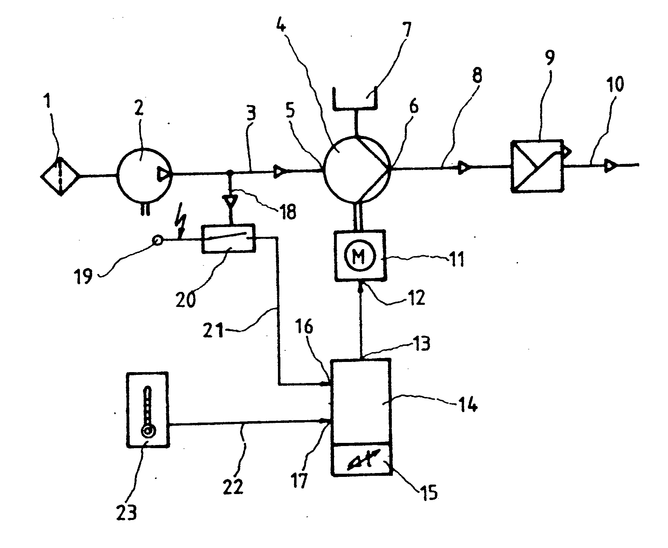

Die Erfindung wird an Hand eines Ausführungsbeispiels, das in der Zeichnung dargestellt ist, näher erläutert.

Die Zeichnung zeigt eine Einrichtung zum Einbringen von Frostschutzmittel in eine Druckluftbremsanlage. Die für diese Druckluftbremsanlage benötigte Druckluft wird in einem Luftpresser 2 erzeugt, der über ein Filter 1 Atmosphärenluft ansaugt und dessen Ausgangsdruck in einem Druckregler 9 geregelt wird. Der Ausgang des Druckreglers 9 speist über eine Druckluftleitung 10 einen nicht dargestellten Druckluft-Vorratsbehälter.

Um zu verhindern, daß bei Außentemperaturen um den Gefrierpunkt herum oder darunter die Luftfeuchte in der beschriebenen Druckluftbremsanlage gefriert, ist eine Frostschutzpumpe 4 vorgesehen, die zwischen dem Luftpresser 2 und dem Druckregler 9 angeordnet ist.

Die vom Luftpresser 2 erzeugte Druckluft wird einem Eingang 5 der Frostschutzpumpe 4 über eine Druckluftleitung 3 zugeführt. Ein Ausgang 6 der Frostschutzpumpe 4 ist über eine Druckluftleitung 8 mit dem Druckregler 9 verbunden. Die Frostschutzpumpe 4 enthält in bekannter Weise als Fördereinrichtung für das Frostschutzmittel aus einem Frostschutzmittel-Vorratsbehälter 7 in die Druckluftleitung 8 der Druckluftbremsanlage eine Pumpe oder z.B. eine steuerbare Ventileinrichtung. Die Fördereinrichtung kann auch eine direkt pneumatisch angetriebene Pumpe enthalten, die über eine elektrische Steuereinrichtung wie z.B. einen Elektromagneten steuerbar ist. Zur Betätigung einer solchen pneumatisch angetriebenen Pumpe ist diese an eine Druckluftleitung der Druckluftbremsanlage angeschlossen. Als Frostschutzmittel dient z.B. Spiritus.

Für den Antrieb der Fördereinrichtung ist eine elektrisch steuerbare Antriebseinrichtung 11 vorgesehen, die z.B. aus einem Motor oder einem Elektromagneten bestehen kann. Es ist auch möglich, daß die Antriebseinrichtung 11 einen pneumatischen Antrieb enthält, der elektrisch steuerbar ist. Die Antriebseinrichtung 11 kann für einen Störungsfall zusätzlich manuell betätigbar ausgebildet sein. Die Steuerung der Antriebseinrichtung 11 erfolgt normalerweise durch Anlegen eines Steuersignals an einen Steuereingang 12 der Antriebseinrichtung 11.

Zur Steuerung der Antriebseinrichtung 11 ist ein elektrisches Steuerteil 14 vorgesehen, dessen Steuersignal-Ausgang 13 über eine Signalleitung mit dem Steuereingang 12 der Antriebseinrichtung 11 verbunden ist. Das Steuerteil 14 besitzt mehrere Signaleingänge 16, 17, über die das Steuerteil 14 an mehrere Signalerzeuger 20, 23 angeschlossen ist. Die den Signaleingängen 16, 17 zugeführten Signale bewirken in dem Steuerteil 14 eine bestimmte Betriebsweise der Antriebseinrichtung 11, so daß die Förderleistung bzw. Fördermenge der Frostschutzpumpe 4 in Abhängigkeit der den Signaleingängen 16, 17 des Steuerteils 14 zugeführten Signale steuerbar ist. Um die Steuerung der Antriebseinrichtung 11 in und/oder nach vorbestimmten oder einstellbaren Zeitintervallen betreiben zu können, enthält das Steuerteil 14 ein vorzugsweise veränderbares und steuerbares Zeitglied 15.

Als Signalerzeuger sind ein Druckmesser 20 und ein Temperaturmesser 23 vorgesehen. Der Druckmesser 20 ist über eine Druckluftleitung 18 an die Druckluftleitung 3 angeschlossen. Der Druckmesser 20 kann auch direkt an den Eingang 5 der Frostschutzpumpe 4 angeschlossen sein. Bei einem vorbestimmten Druck in der Druckluftleitung 18 wird im Druckmesser 20 ein Kontakt geschlossen, so daß eine Spannungsquelle 19 über den Druckmesser 20 und eine Signalleitung 21 mit dem Signaleingang 16 des Steuerteils 14 verbunden ist. Der Druckmesser 20 kann auch aufwendiger ausgebildet sein und über mehrere Signalleitungen mit dem Steuerteil 14 verbunden sein. In jedem Fall ist es auf die beschriebene Weise möglich, die Frostschutzpumpe 4 in Abhängigkeit von dem Luftdruck in der Druckluftleitung 3 steuern zu können. Damit ist eine Anpassung der Förderleistung bzw. der Fördermenge der Frostschutzpumpe 4 an den Luftdurchsatz der Druckluftbremsanlage möglich.

Der Temperaturmesser 23 erzeugt ein temperaturabhängiges Signal, das dem Signaleingang 17 des Steuerteils 14 über eine Signalleitung 22 zugeführt wird. Auf diese Weise ist es z.B. möglich, den Betrieb der Frostschutzpumpe 4 bei tiefen Temperaturen dem Luftdurchsatz der Druckluftbremsanlage anzupassen und bei Temperaturen über dem Gefrierpunkt den Betrieb der Frostschutzpumpe 4 automatisch einzustellen.

Es ist darüber hinaus möglich, an das Steuerteil 14 weitere Signalerzeuger anzuschließen, so daß der Betrieb der Frostschutzpumpe 4 auch in Abhängigkeit weiterer Parameter der Umwelt und/oder der Druckluftbremsanlage steuerbar ist.

Um eine kompakte Einrichtung zu erhalten, ist es vorteilhaft, die Fördereinrichtung 4, die Antriebseinrichtung 11 und das Steuerteil 14 baulich zu vereinigen. Es ist auch vorteilhaft, den Druckschalter 20 mit der Fördereinrichtung 4 baulich zu vereinigen.

**Patentansprüche**

1. Einrichtung zum Einbringen von Frostschutzmittel in einer Druckluftanlage mit einer Fördereinrichtung zum Fördern des Frostschutzmittels aus einem Vorratsbehälter in die Druckluftanlage, mit folgenden Merkmalen:
a) zur Betätigung der Fördereinrichtung ist eine elektrisch steuerbare Antriebseinrichtung (11) vorgesehen;
b) der Steuereingang (12) der Antriebseinrichtung (11) ist an den Ausgang (13) eines elektrischen Steuerteils (14) angeschlossen;
c) das elektrische Steuerteil (14) ist mit einem Signaleingang (17) für einen automatisch auf einen betriebserheblichen Parameter ansprechenden Signalerzeuger versehen;
gekennzeichnet durch folgende Merkmale:
d) als Signalerzeuger dient ein temperaturabhängiges Glied (23);
e) das elektrische Steuerteil (14) dient zur automatischen Ansteuerung der Antriebseinrichtung (11) in Abhängigkeit von dem Ausgangssignal des temperaturabhängigen Gliedes (23).

2. Einrichtung nach Anspruch 1, dadurch gekennzeichnet, daß als Fördereinrichtung eine Pumpe dient.

3. Einrichtung nach Anspruch 1, dadurch gekennzeichnet, daß als Fördereinrichtung eine Ventileinrichtung dient.

4. Einrichtung nach wenigstens einem der vorhergehenden Ansprüche, dadurch gekennzeichnet, daß die Antriebseinheit (11) einen Elektromotor enthält.

5. Einrichtung nach wenigstens einem der Ansprüche 1 bis 3, dadurch gekennzeichnet, daß die Antriebseinrichtung einen Elektromagneten enthält.

6. Einrichtung nach wenigstens einem der Ansprüche 1 bis 3, dadurch gekennzeichnet, daß die Antriebseinrichtung (11) einen elektrisch steuerbaren pneumatischen Antrieb enthält.

7. Einrichtung nach Anspruch 6, gekennzeichnet durch folgende Merkmale:
a) Die Fördereinrichtung enthält eine pneumatisch betätigbare Pumpe;
b) der Betätigungsteil der pneumatisch betätigbaren Pumpe ist an eine Druckluftleitung der Druckluftanlage angeschlossen.

8. Einrichtung nach wenigstens einem der vorhergehenden Ansprüche, dadurch gekennzeichnet, daß das elektrische Steuerteil (14) mit einem weiteren Signaleingang (16) für einen weiteren Signalerzeuger (20) versehen ist, wobei als weiterer Signalerzeuger (20) ein an die Druckluftanlage angeschlossener Druckschalter dient.

9. Einrichtung nach wenigstens einem der vorhergehenden Ansprüche, dadurch gekennzeichnet, daß das Steuerteil (14) ein Zeitglied (15) enthält.

10. Einrichtung nach Anspruch 10, dadurch gekennzeichnet, daß das Zeitglied (15) einstellbar ist.

11. Einrichtung nach wenigstens einem der vorhergehenden Ansprüche, dadurch gekennzeichnet, daß die Antriebseinrichtung manuell betätigbar ist.

12. Einrichtung nach wenigstens einem der vorhergehenden Ansprüche, dadurch gekennzeichnet, daß die Fördereinrichtung (4), die Antriebseinrichtung (11) und das Steuerteil (14) baulich vereinigt sind.

13. Einrichtung nach Anspruch 8, dadurch gekennzeichnet, daß der pneumatische Anschluß des Druckschalters oder Druckmessers (20) mit dem Anschluß (5) der Fördereinrichtung (4) für die Druckluftanlage verbunden ist.

14. Einrichtung nach wenigstens einem der vorhergehenden Ansprüche, dadurch gekennzeichnet, daß der Druckschalter oder Druckmesser (20) mit der Fördereinrichtung (4) baulich vereinigt ist.

## Claims

1. Device for introducing antifreeze into a compressed-air system, having a conveying device for conveying the antifreeze from a storage container into the compressed-air system, and having the following features:

a) an electrically controllable drive device (11) is provided for actuating the conveying device;

b) the control input (12) of the drive device (11) is connected to the output (13) of an electrical control component (14);

c) the electrical control component (14) is provided with a signal input (17) for a signal generator that responds automatically to an important operating parameter;

characterised by the following features:

d) a temperature-responsive member (23) serves as the signal generator;

e) the electrical control component (14) serves to actuate the drive device (11) automatically in dependence on the output signal of the temperature-responsive member (23).

2. Device according to claim 1, characterised in that a pump serves as the conveying device.

3. Device according to claim 1, characterised in that a valve device serves as the conveying device.

4. Device according to at least one of the preceding claims, characterised in that the drive device (11) contains an electric motor.

5. Device according to at least one of claims 1 to 3, characterised in that the drive device contains an electromagnet.

6. Device according to at least one of claims 1 to 3, characterised in that the drive device (11) contains an electrically controllable pneumatic drive.

7. Device according to claim 6, characterised by the following features:

a) the conveying device contains a pneumatically actuable pump;

b) the actuating member of the pneumatically actuable pump is connected to a compressed-air line of the compressed-air system.

8. Device according to at least one of the preceding claims, characterised in that the electrical control component (14) is provided with a further signal input (16) for a further signal generator (20), a pressure switch that is connected to the compressed-air system serving as the further signal generator (20).

9. Device according to at least one of the preceding claims, characterised in that the control component (14) contains a timing element (15).

10. Device according to claim 9, characterised in that the timing element (15) is adjustable.

11. Device according to at least one of the preceding claims, characterised in that the drive device can be actuated manually.

12. Device according to at least one of the preceding claims, characterised in that the conveying device (4), the drive device (11) and the control component (14) are combined structurally.

13. Device according to claim 8, characterised in that the pneumatic connection of the pressure switch or pressure gauge (20) is joined to the connection (5) of the conveying device (4) for the compressed-air system.

14. Device according to at least one of the preceding claims, characterised in that the pressure switch or pressure gauge (20) is combined structurally with the conveying device (4).

## Revendications

1. Dispositif pour introduire de l'antigel dans un système à air comprimé, comprenant un organe de transfert pour transférer de l'antigel d'un réservoir d'antigel dans le système à air comprimé, dispositif qui présente les particularités suivantes:

a) un dispositif d'entraînement (11) à commande électrique est prévu pour actionner l'organe de transfert;

b) l'entrée de commende (12) du dispositif d'entraînement (11) est reliée à la sortie (13) d'une unité de commande électrique (14);

c) l'unité de commande électrique (14) présente une entrée de signal (17) pour un générateur de signal réagissant automatiquement à un paramètre important pour le fonctionnement;

caractérisé en ce que:

d) le générateur de signal est formé par un élément (23) sensible à la température;

e) l'unité de commande électrique (14) sert à la commande automatique du dispositif d'entraînement (11) en fonction du signal de sortie de l'élément (23) sensible à la température.

2. Dispositif selon la revendication 1, caractérisé en ce que l'organe de transfert est une pompe.

3. Dispositif selon la revendication 1, caractérisé en ce que l'organe de transfert est un dispositif à soupape.

4. Dispositif selon au moins une des revendications précédentes, caractérisé en ce que le dispositif d'entraînement (11) comprend un moteur électrique.

5. Dispositif selon au moins une des revendications 1 à 3, caractérisé en ce que le dispositif d'entraînement comprend un électroaimant.

6. Dispositif selon au moins une des revendications 1 à 3, caractérisé en ce que le dispositif d'entraînement (11) comprend un entraînement pneumatique à commande électrique.

7. Dispositif selon la revendication 6, caractérisé en ce que:

a) l'orqane de transfert est constitué par une pompe mue pneumatiquement;

b) la partie d'actionnement de la pompe est raccordée à une conduite d'air comprimé du système à air comprimé.

8. Dispositif selon au moins une des revendications précédentes, caractérisé en ce que l'unité de commande électrique (14) est pourvue d'une entrée de signal supplémentaire (16) pour un générateur de signal supplémentaire (20) constitué par un interrupteur manométrique raccordé au système à air comprimé.

9. Dispositif selon au moins une des revendications précédentes, caractérisé en ce que l'unité de commande (14) contient un élément de minutage (15).

10. Dispositif selon la revendication 9, caractérisé en ce que l'élément de minutage (15) est réglable.

11. Dispositif selon au moins une des revendications précédentes, caractérisé en ce que le dispositif d'entraînement peut être actionné manuellement.

12. Dispositif selon au moins une des revendications précédentes, caractérisé en ce que l'organe de transfert (4), le dispositif d'entraînement (11) et l'unité de commande (14) sont réunis en un ensemble.

13. Dispositif selon la revendication 8, caractérisé en ce que le raccordement pneumatique de l'interrupteur manométrique ou le capteur de pression (20) est relié au raccordement (5) de l'organe de transfert (4) au système à air comprimé.

14. Dispositif selon au moins une des revendications précédentes, caractérisé en ce que l'interrupteur manométrique ou le capteur de pression (20) est réuni en un ensemble unique avec l'organe de transfert (4).